(19) Europäisches Patentamt / European Patent Office / Office européen des brevets

(11) **EP 1 426 165 B1**

(12) **EUROPEAN PATENT SPECIFICATION**

| | |
|---|---|
| (45) Date of publication and mention of the grant of the patent: **23.12.2009 Bulletin 2009/52** | (51) Int Cl.: **B29C 61/02** (2006.01) **B29C 55/00** (2006.01) **C08J 5/18** (2006.01) |
| (21) Application number: **02762784.3** | (86) International application number: **PCT/JP2002/008307** |
| (22) Date of filing: **15.08.2002** | (87) International publication number: **WO 2003/016026 (27.02.2003 Gazette 2003/09)** |

(54) **HEAT-SHRINKABLE POLYSTYRENE BASED RESIN FILM ROLL AND METHOD FOR PRODUCTION THEREOF, AND HEAT-SHRINKABLE LABEL**

WÄRMESSCHRUMPFBARE HARZFILMROLLE AUF POLYSTYROLBASIS UND HERSTELLUNGSVERFAHREN DAFÜR SOWIE WÄRMESCHRUMPFBARES ETIKETT

ROULEAU DE FILM DE RESINE A BASE DE POLYSTYRENE THERMORETRACTABLE, PROCEDE PERMETTANT SA PRODUCTION, ET ETIQUETTE THERMORETRACTABLE

(84) Designated Contracting States:
**AT BE BG CH CY CZ DE DK EE ES FI FR GB GR IE IT LI LU MC NL PT SE SK TR**

(30) Priority: **17.08.2001 JP 2001247652**
**17.08.2001 JP 2001247653**
**17.08.2001 JP 2001247654**

(43) Date of publication of application:
**09.06.2004 Bulletin 2004/24**

(73) Proprietor: **TOYOBO CO., LTD.**
**Osaka-shi**
**Osaka 530-8230 (JP)**

(72) Inventors:
• **TAKEGAWA, Yoshinori**
**Toyobo Co., Ltd. Research Ctr.**
**Otsu-shi, Shiga 520-0292 (JP)**
• **ITO, Katsuya**
**c/o Toyobo Co., Ltd. Research Center**
**Otsu-shi, Shiga 520-0292 (JP)**
• **HAYAKAWA, Satoshi**
**Toyobo Co., Ltd. Inuyama Factory**
**Inuyama-shi, Aichi 484-0000 (JP)**
• **TABOTA, Norimi**
**Toyobo Co., Ltd. Inuyama Factory**
**Inuyama-shi, Aichi 484-0000 (JP)**

• **KOMEDA, Shigeru**
**c/o Toyobo Co., Ltd.**
**Osaka-shi, Osaka 530-8230 (JP)**
• **NOSE, Katsuhiko**
**c/o Toyobo Co., Ltd.**
**Osaka-shi, Osaka 530-8230 (JP)**

(74) Representative: **Müller-Boré & Partner**
**Patentanwälte**
**Grafinger Strasse 2**
**81671 München (DE)**

(56) References cited:

| | |
|---|---|
| EP-A- 0 058 952 | JP-A- 5 338 005 |
| JP-A- 6 344 435 | JP-A- 7 020 785 |
| JP-A- 7 032 468 | JP-A- 7 137 092 |
| JP-A- 7 144 365 | JP-A- 8 253 655 |
| JP-A- 9 029 737 | JP-A- 9 193 246 |
| JP-A- 9 193 246 | JP-A- 9 235 443 |
| JP-A- 10 086 147 | JP-A- 10 113 928 |
| JP-A- 48 066 656 | JP-A- 50 006 673 |
| JP-A- 52 115 855 | JP-A- 58 217 324 |
| JP-A- 60 006 414 | JP-A- 61 192 526 |
| JP-A- 62 057 453 | JP-A- 62 148 241 |
| JP-A- 63 315 222 | JP-A- 2000 169 601 |
| JP-A- 2000 233 444 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a heat-shrinkable polystyrene based resin film roll comprising a heat-shrinkable polystyrene based resin film wound into the roll, which is appropriate as packaging materials used for coating, tying, exterior wrapping and the like of vessels and the like, a method for production thereof, and a heat-shrinkable label.

Background Art

A heat-shrinkable film has a function of shrink properties and thereby can be integrally laminated on an object through shrinkage force and shapingproperties of the film itself without using a fixing means such as an adhesive agent and a catch, thereby having a function of not merely mechanically protecting an object with lamination and coating but also tying, sealing and the like. Further, in the case where a heat-shrinkable film itself has a particular function, which can be retrofitted to an object with lamination. This characteristic has been effectively used in the field of packaging in which a main purpose is to preserve an object, protect it during distribution and allow display and design properties thereto, being utilized for coating, tying, exterior wrapping or sealing of, for example, various vessels such as jars including bottles made of glass and plastics, and cans, and continuous bodies such as pipes, sticks, wood and various rodlike bodies, or sheet-form bodies; specifically, being used for coating a part or the whole of a cap portion, a shoulder portion and a barrel portion of jars for the purpose of displaying, protecting, tying, improving commercial values by functionalization, and the like; further, being used for collecting and packaging every plural pieces of bodies to be packaged such as boxes, jars, plates, sticks and notebooks, and packaging (skin package) bodies to be packaged by a film closely contacted therewith. In the case where molding for display and design is previously allowed to a film, then the film is made into a commercial product, namely a label.

Raw materials for a heat-shrinkable film to be used involve polyvinyl chloride, polystyrene, polyester, polyamide, aliphatic polyolefin, a derivative thereof, rubber hydrochloride and the like. Typically, a film comprising these raw materials is molded into a tube shape to cover, for example, jars, and pipes and the like are collected to be thereafter packaged and tied by heat-shrinking the film. Any conventional heat-shrinkable film, however, is poor in heat resistance and thereby is not allowed to resist boiling and retorting at high temperatures, accordingly having a defect such as not to be pasteurized at high temperatures in the case of being applied to uses for food, sanitary fitments and pharmaceuticals. The problem is that, for example, retorting easily damages a conventional film during the treatment.

With regard to a conventional heat-shrinkable film, a film comprising polyvinyl chloride based resin is extremely favorable for heat-shrinkable properties but poor in adhesive properties to ink of printing for a label, and further easily produces a gelatinous substance of an additive mixed thereinto on the occasion of filming, thereby easily causing a pin hole on a printing plane. In addition, the problem is that the film is discarded and incinerated with difficulty in view of environment. A film comprising polyester based resin is superior in heat resistance, dimensional stability, solvent resistance and the like; however, a precise control technique of producing conditions is required for achieving desirable heat-shrinkable properties, adhesive properties and the like, leading to the problem of costs and the like.

Also, the usefulness of a heat-shrinkable film has been allowing the heat-shrinkable film to be used in the field in which a film and a label except the heat-shrinkable film have been conventionally used. With regard to a label of beverage vessels, particularly, a sticking label comprising a film except paper and a heat-shrinkable film has been frequently replaced with the heat-shrinkable label. In such a case, a special function is required for protecting vessels and contents. For example, preservation by heating, which has been conventionally performed only for beverages filled in glass jars and metal cans, can be performed also for beverages filled in plastic bottles by an improvement in the heat resistance thereof; consequently bottles mounted with a label made of a heat-shrinkable film are put together with canned beverages in a heat insulating case such as a hot warmer at a convenience store and a station stall, and the diversification of a high-temperature environment experienced after shrinkage mounting has been demanding an improvement in the heat resistance of a heat-shrinkable film. In such a case, a conventional heat-shrinkable film easily causes a label defect due to softening, embrittlement and the like during and after the preservation by heating of vessels mounted therewith. With regard to a hot warmer, particularly, a hot plate portion for putting vessels thereon is controlled at a temperature of approximately 50°C to 75°C in order to make the temperature of beverages into approximately 55°C, however, the temperature inside the hot plate exceeds 120°C partially and temporarily, whereby the defect of a heat-shrinkable film is occasionally caused. Further, in the case where vessels fall in a hot warmer, a heat-shrinkable film is contacted with pressure on the surface of a hot plate, and thereby the problem is occasionally caused such that the conditions of harsh temperature and pressure render the defect of the film serious and deteriorate heat resistance after shrinkage mounting.

Also, a function of protecting bodies to be packaged from rays, particularly, near ultraviolet rays having a great influence has been demanded for vessels, packaging materials and the like accommodating the bodies to be packaged, which are easily deteriorated by the rays, for example, beverages such as green tea, juice and beer, food having synthetic or natural colorant with a low light resistance, cosmetics, sanitary fitments, and pharmaceuticals. In addition, a heat-shrinkable label has been vigorously applied to the field of a label of plastic bottle vessels with reference to the problem of recycling, and various forms and modes of packaging design have been performed.

Also, the low-temperature moist heat shrinking process, which is a process used for aseptic fill packaging allowed by a composition of cleaning technique, sterilizing technique, high-speeding technique of packaging and the like, can offer the sterilization of beverages and the like in a short time and thereafter the completion of packaging by a short-time process at relatively low temperatures, so as to intend the prevention of heat deterioration of contents and the improvement of packaging efficiency, thereby requiring the development of a heat-shrinkable filmusable for this low-temperature moist heat shrinking process. A heat-shrinkable film usable for the low-temperaturemoist heat shrinkingprocess needs tobe superior in shrink properties in a low-temperature range, and additionally a relatively high shrinkage rate is advantageous thereto in view of the shortening of process time. A heat-shrinkable polyester based resin film has been conventionally used as a film having such properties; however, a bottle and a label made of the film are difficult to separate in the case where it is necessary to separately collect them, while a heat-shrinkable polystyrene based resin film, for which gravity separation is allowed, has been desirably used and has poor low-temperature shrink properties, though; the setting of a low shrinkage temperature easily causes the problem such that natural shrinkage is rendered larger before being packaged and heat resistance is deteriorated after shrinkage mounting.

In addition, a heat-shrinkable polystyrene based film for a special use as described above has been in an increasing demand, so that a homogeneous film roll needs to be produced, which can provide a film stably functioning with a favorable repeatability even in any part of the roll. In the case of a film roll having an inhomogeneous quality, for example, for the reason that heating conditions in a tunnel are the same in the heat shrinking process of a label, a large variation of heat shrinkage rate of the above-mentioned each labels causes a label exhibiting an improper heat shrinkage rate, which causes appearance defect such as shrinkage deficiency, shrinkage spot, wrinkling, distortion of patterns and tight ends, and thereby is inappropriate for a final product. The same label for a final product is typically processed from a piece of film roll, so that a large variation of heat shrinkage rate of films composing a piece of film roll increases the fraction defective in the heat shrinking process as described above. In particular, this is a serious problem in uses for a full label for bottles, which covers a large area and requires a high shrinkage rate. Also, close adhesion stress in mounting on vessels varies with a region, thereby occasionally resulting in the occurrence of defect in heat resistance even with the use of a film having a superior heat resistance in a hot warmer. Further, in the case of allowing a film low-temperature shrink properties, then the setting of a low shrinkage temperature causes the problem such that natural shrinkage is rendered larger before being packaged and heat resistance is deteriorated after shrinkage mounting.

The present invention is intended for providing a heat-shrinkable polystyrene based resin film which has a sufficiently high heat shrinkage rate, causes no shrinkage unevenness thereon in heat-shrinking, has a beautiful appearance, additionally maintains the appearance stably even under the conditions of high temperatures after shrinking, and particularly is the most appropriate for the preservation by heating such as a hot warmer; also, offers an extremely high covering properties even in mounting on vessels having a complicated shape, and is the most appropriate for packaging products to which the prevention of deterioration by rays is necessary; further, a heat-shrinkable polystyrene based film roll which can stably provide the heat-shrinkable polystyrene based resin film having a sufficiently high heat shrinkage rate in the low-temperature shrinking process, and can reduce the occurrence of defect, such as shrinkage defect, shrinkage spot, wrinkling, distortion and tight end in the after-processing step, caused by the variation of heat shrinkage rate in the film roll; and a method for production thereof and a heat-shrinkable label.

Disclosure of the Invention

The Invention is disclosed in the claims of the present application.

A heat-shrinkable polystyrene based resin film forming a film roll according to the present invention, in a constant range such that film physical properties are stable with respect to the flow direction in producing the film, making a finishing end of the roll of the film roll into a beginning end, making a starting end of the roll thereof into a terminating end, providing a first cut out part in a 2m or less inward portion from the above-mentioned beginning end, and further providing another cut out part at every approximately 100m from the first cut out part, in measuring a heat shrinkage rate of a sample cut out from each of the cut out parts, which is denoted by a rate of change in length in the main shrinking direction after a treatment of immersing in a hot water at a temperature of 85°C for 10 seconds with respect to a state before the above-mentioned treatment, needs to exhibit the heat shrinkage rate of each of the samples within ±5% relative to an average value of the heat shrinkage rate of the total samples. In the present invention, 'a heat shrinkage rate' is denoted by a rate of change in length after a treatment of immersing a 10cm × 10cm square-form sample cut out from the cut part in a hot water at a temperature of 85°C for 10 seconds to pull up and next immersing it in a water at a temperature of 25°C for 10 seconds to pull up with respect to a state before the treatment. The heat shrinkage rate of each of the samples is preferably within ±3% relative to an average value of the heat shrinkage rate of the total samples, more preferably within ±2%.

In the present invention, a heat shrinkage rate is not necessarily uniformized at a high level as described above covering the whole range of a heat-shrinkable polystyrene based resin film forming a film roll, and is preferred to be uniformized at a high level as described above at least in a constant range such that film physical properties are stable with respect to the flow direction in producing the film. Also, in the present invention, the number of the above-mentioned constant ranges (a range produced while operating in a stationary state) is not limited, and only one constant range (including a case such that a constant range covers the whole film roll) may exist in one film roll.

'Film physical properties are stable with respect to the flow direction in producing a film' signifies that physical properties, particularly heat shrinkage rate properties, are continually stable. That is to say, a heat-shrinkable polystyrene based resin film is produced by molding molten resin into a film shape to thereafter draw, and f ilmphysical properties greatly vary with the change of film molding conditions and drawing conditions even after stabilizing the film molding step and the drawing step. The present invention has been made not to uniformize a heat shrinkage rate of a film obtained in unstable film molding step and drawing step but to uniformize a heat shrinkage rate at a higher level than a conventional level in a film obtained through the operation in a stationary state after stabilizing the film molding step and the drawing step. The above-mentioned constant range in the total length preferably occupies 80% or more in length of the whole film roll, more preferably 90% or more.

In a constant range, making a finishing end of the roll of a film roll into a beginning end, making a starting end of the roll thereof into a terminating end, providing a first cut out part in a 2m or less inward portion from the above-mentioned beginning end, providing a final cut part in a 2m or less inward portion from the above-mentioned terminating end, and further providing another cut part at every approximately 100m from the first cut out part, the uniformity of a heat shrinkage rate in a constant range can be evaluated by measuring a heat shrinkage rate of a sample cut out from each of the cut out parts. With regard to a film roll according to the present invention, in calculating an average value of a heat shrinkage rate of the total samples, a heat shrinkage rate of a sample in each of the cut out parts is within ±5% relative to the above-mentioned average value. That is to say, the absolute value $|HS_n - HS_{av}|$ of a difference between a heat shrinkage rate $HS_n$ (%) of each of the samples cut out from the cut out parts and an average value $HS_{av}$ (%) of a heat shrinkage rate of the total samples is uniformly made into 5% or less. Further, in other words, the above-mentioned requirements are satisfied if a difference between the maximum value $HS_{max}$ (%) of $HS_n$ and $HS_{av}$ as well as a difference between the minimum value $HS_{min}$ (%) of $HS_n$ and $HS_{av}$ are both within ±5%.

A heat shrinkage rate of each of the samples is within ±5% relative to an average value of a heat shrinkage rate of the total samples, thereby decreasing the variation of a heat shrinkage rate of the whole film roll and consequently decreasing the variation of a heat shrinkage rate of each label produced from one film roll, leading to a sharp decrease in the fraction defective in the heat shrinking process. Also, close adhesion stress in mounting on vessels varies less with a region, thereby reducing the defect in heat resistance in a hot warmer.

A method for making a heat shrinkage rate of each of the samples within ±5% relative to an average value of a heat shrinkage rate of the total samples involves, as described later, the adjustment of producing conditions of a film, particularly, the homogenization of a mixture state of resins composing a film, and a method for adjusting the variation of a surface temperature of a film measured at an arbitrary point of time in the steps of preheating, drawing and heat-treating.

Also, a heat shrinkage rate of each of the samples is made within ±5% relative to an average value of a heat shrinkage rate of the total samples, which is appropriate for a case such that a heat-shrinkable polystyrene based resin film forming a film roll according to the present invention has a width of 200mm or more and a length of 300m or more. A film having a width of less than 200mm is rendered poor in the above-mentioned processing appropriateness and handling properties, thereby easily having a less influence such as an increase in the fraction defective, while a filmhaving a length of less than 300m scarcely causes an increase in the fraction defective due to the variation of a heat shrinkage rate of the whole film roll. A film having a width of 200mm or more and a length of 300m or more is superior in the processing appropriateness and handling properties from the printing to the process of making a final product such as a label, however having a great influence such as an increase in the fraction defective due to the variation of a heat shrinkage rate of the whole film roll; then, the above-mentioned variation within ±5% allows an increase in the fraction defective to be inhibited. In particular, such variation is appropriate for a case such that a heat-shrinkable polystyrene based resin film forming a film roll has a width of 300mm or more, furthermore appropriate for a width of 400mm or more. Also, in particular, such variation is appropriate for a case such that a heat-shrinkable polystyrene based resin film forming a film roll has a length of 400m or more, furthermore appropriate for a length of 500m or more. In addition, from the viewpoint of the handling properties, it is preferable that a film has a width of 1500mm or less and a length of 6,000m or less in the case of a thickness of 50μm.

Also, a heat shrinkage rate of each of the samples is made within ±5% relative to an average value of a heat shrinkage rate of the total samples, which is appropriate for a case such that a heat-shrinkable polystyrene based resin film forming a film roll according to the present invention comprises two or more kinds of resins of different compositions. The above-mentioned film easily causes an increase in the fraction defective due to the variation of a heat shrinkage rate of the whole film roll; then, the above-mentioned variation within ± 5% allows an increase in the fraction defective to be inhibited.

Drawing a marked line at an interval of 200 mm in the main shrinking direction on a sample cut out so as to have a width of 15 mm and a length of 210 mm, a heat-shrinkable polystyrene based resin film forming a film roll according to the present invention preferably exhibits a maximum heat shrinkage rate of 40% or more, which is a maximum value of a rate of change in length in the main shrinking direction of the above-mentioned sample after a treatment of heating at every 10°C from 100°C to 150°C for 1 minute with respect to a length between the marked lines before the above-mentioned treatment. A maximum heat shrinkage rate of less than 40% renders shrinkage insufficient in the case of using as a label (a body label) of a body part of a bottle generally used, which label closely adheres to the bottle with difficulty. A maximum heat shrinkage rate is more preferably 50% or more. A maximum heat shrinkage rate of 50% or more does not cause shrinkage deficiency even as a label of a PET bottle requiring high shrink properties. A maximum heat shrinkage rate is further more preferably 60% or more, particularly preferably 70% or more. A maximum heat shrinkage rate in the above-mentioned range causes shrinkage deficiency with difficulty even as a label of a vessel having a complicated shape.

A method for making a maximum heat shrinkage rate into the above-mentioned range involves a method such as kind and mixture ratio of resins composing a heat-shrinkable film, the mixture of an additive, for example, a plasticizer, the adjustment of producing conditions of a film, particularly, an increase in the multiplying factor of drawing, a reduction in thermal fixation, and the adjustment of a compatible state of components.

Being mounted on a bottle as a label form of a cylindrical tube-shaped transparent vessel such that the main shrinking direction is made into a cross-sectional direction of a cylinder, a heat-shrinkable polystyrene based resin film forming a film roll according to the present invention preferably exhibits an average value T of a transmittance of near ultraviolet rays represented in the following formula 1, which is 0.5 or less after heat-shrinking in the case of irradiating the vessel from outside to inside thereof with the near ultraviolet rays from a direction perpendicular to a rotational symmetry axis of the vessel. An average value T of a transmittance of nearultraviolet rays is more preferably 0.2 or less, further more preferably 0.1 or less, still further more preferably 0.08 or less and particularly preferably 0.06 or less. An average value T more than 0.5 of a transmittance of near ultraviolet rays reduces light shielding properties for bodies to be packaged by a heat-shrinkable polystyrene based resin film according to the present invention, and scarcely prevents the bodies to be packaged from being deteriorated by rays.

$$T = A / B \qquad\qquad \text{formula 1}$$

A: an average value (n = 10) of a light energy density transmitting into the film and the vessel in a state of mounting the heat-shrinkable polystyrene based resin film on the transparent vessel

B: an average value (n = 10) of a light energy density transmitting into the transparent vessel in a state of not mounting the heat-shrinkable polystyrene based resin film on the transparent vessel

A method for obtaining a desirable average value T of a transmittance of near ultraviolet rays involves the selection of kind and mixture ratio of polystyrene based resins composing a heat-shrinkable film, the adjustment of crystallinity and compatibility of a film, the adjustment of thickness thereof, the mixture into a film and/or the application on a film plane of a light shielding agent, a light absorbing agent, an ultraviolet absorbing agent, a selective light absorbing agent and the like, the formation of an image through coloring by the printing on a film plane thereof and the like, the increase of an image area, the increase of the density of an image pattern, the increase of an image density, and the like. In addition, an average value T of a transmittance of near ultraviolet rays can be reduced by the increase of a covered area in mounting as a label on bodies to be packaged as well as the increase of closely adhesive strength to bodies to be packaged by the adjustment of heat-shrinkable properties or heat-shrinking conditions of a film.

Drawing a marked line at an interval of 50mm in the longitudinal direction in the middle of a sample cut out so as to have a width of 5mm and a length of 100 mm while regarding the main shrinking direction as the longitudinal direction, a heat-shrinkable polystyrene based resin film forming a film roll according to the present invention preferably exhibits a rate of change in length of 0% to 90% in the main shrinking direction of the above-mentioned sample after a treatment of loading a tension of 51.18 gf at a temperature of 110°C for 1 minute with respect to a length between the marked lines before the above-mentioned treatment. The above-mentioned rate of change in length is more preferably 0% to 70%, further more preferably 0% to 50%. A film having the above-mentioned rate of change in length in the above-mentioned range prevents creep in the harsh state of preservation by heating and the like, leading to a superior heat resistance. The above-mentioned smaller rate of change in length brings less creep.

A heat-shrinkable film is exposed to the harsh conditions in the case of being preserved by heating in a hot warmer and the like in a state of adhesion with pressure after being mounted by heat-shrinking as a label and the like. Accordingly, heat resistance in preservation by heating can be improved by limiting the degree of creep by tension instead of the degree of creep by compressive force concurring with shrinkage behavior in preservation by heating at a temperature of 110˚C. The degree of creep is represented by the rate of change in length.

Drawing a marked line at an interval of 50mm in the longitudinal direction in the middle of a sample cut out so as to have a width of 5mm and a length of 100 mm while regarding the main shrinking direction as the longitudinal direction, a part of the above-mentioned heat-shrinkable film as a label, corresponding to a maximum diameter part of a bottle in a state of peeling off the bottle after mounting on the bottle and heat-shrinking, preferably exhibits a rate of change in length of 0% to 90% in the main shrinking directionof the above-mentioned sample after a treatment of loading a tension of 51.18 gf at a temperature of 110˚C for 1 minute with respect to a length between the marked lines before the above-mentioned treatment. In the case of forming a label so as to be mounted on a bottle and heat-shrunk, a part corresponding to a maximum diameter part of the bottle has scarce shrinkage; therefore, if a rate of change in length is 0% to 90% in the main shrinking direction of the above-mentioned sample after a treatment of loading a tension of 51.18gf at a temperature of 110˚C for 1 minute with respect to a length between the marked lines before the above-mentioned treatment, then there exists no problem in heat resistance, and the above-mentioned rate of change in length of 0% to 90% after heat-shrinking brings a superior heat resistance in a harsh state of preservation by heating and the like.

A method for making the above-mentioned rate of change in length into the above-mentioned range involves kind and mixture ratio of resins composing a heat-shrinkable film, particularly, the selection of material resin having a high glass transition temperature, the raising of crystallinity of a film, the raising of compatibility of resins composing a film, the adjustment of producing conditions of a film, particularly, a method such as to control the drawing conditions to leave much shrinkage stress for contributing to hardness, and to control temperature elapsed time and the aligning state of a film in the drawing process to control the degree of crystallinity and alignment crystal of a film, and the like.

Drawing a marked line at an interval of 200mm in the main shrinking direction on a sample cut out so as to have a width of 15mm and a length of 210mm, a heat-shrinkable polystyrene based resin film forming a film roll according to the present invention preferably exhibits a heat shrinkage rate of 5% or more, which is denoted by a rate of change in length between the marked lines in the main shrinking direction of the above-mentioned sample after a treatment of immersing in a hot water at a temperature of 65˚C for 10 seconds with respect to a state before the above-mentioned treatment. The above-mentioned heat shrinkage rate is more preferably 10% or more, further more preferably 20% or more. The above-mentioned heat shrinkage rate of less than 5% reduces low-temperature shrink properties and causes scarce uses for aseptic fill packaging and the like by a heat-shrinkable polystyrene based resin film according to the present invention.

A method for obtaining a desirable above-mentioned heat shrinkage rate involves the selection of kind and mixture ratio of polystyrene based resins composing a heat-shrinkable film, the reduction of glass transition temperature of a film by the mixture of an additive component and the like, and further the reduction of drawing temperature corresponding to glass transition temperature, and the like. In the case where a resin composition composing a film is completely compatible, glass transition temperature is made into a weighted average value with each component, and thereby many additive components are used in order to lower the glass transition temperature to the temperature range of the shrinking process, easily leading to the reduction of heat resistance and dimensional stability. In the case where a resin composition composing a film is incompatible, the shrinkage is performed in the vicinity of glass transition temperature of polystyrene based resins as the main component, and the adjustment of a dispersion state of components with the use of a modifier for adjusting compatibility allows glass transition temperature of the film to be lowered to glass transition temperature of an additive component while retaining heat resistance of the polystyrene based resins.

A heat-shrinkable polystyrene based resin film forming a film roll according to the present invention, in measuring a dynamic viscoelasticity of the film under the conditions of an elastic mode, a frequency of 50 Hz, a temperature range of -20˚C to 250˚C and a heating rate of 2˚C/minute, preferably exhibits a dispersion except alpha dispersion, which is measured in a temperature range such that alpha dispersion derived from polystyrene is measured. According to pp. 169 to 172 of 44th rheology forum lecture syllabus (1996) by Mr. Nakatani, Mr. Yamada et al., a heat-shrinkable polystyrene based resin film exhibiting a dispersion to be measured except alpha dispersion causes shrinkage together with alpha dispersion, namely, a dispersion of relaxation resulting in heat shrinkage phenomenon, and causes a dispersion by the occurrence of crystallization and gelatinous structure in the vicinity of the finishing of the shrinkage, whereby a dispersion is caused and then superior heat resistance and dimensional stability are brought after the shrinkage. A dispersion except alpha dispersion is frequently observed in a polystyrene based resin composition having syndiotactic polystyrene, a copolymer thereof and a crystalline component.

Also, a heat-shrinkable polystyrene based resin film forming a film roll according to the present invention can be obtained by drawing an undrawn sheet exhibiting a dispersion except alpha dispersion, which is measured in a temperature range such that alpha dispersion derived from polystyrene is measured, in measuring a dynamic viscoelasticity of the film under the conditions of an elastic mode, a frequency of 50 Hz, a temperature range of -20 to 250˚C and a heating rate of 2˚C/minute, in the undrawn sheet before being drawn into the above-mentioned heat-shrinkable polystyrene based resin film.

The composition of a polystyrene based resin composing a heat-shrinkable polystyrene based resin film forming a film roll according to the present invention is not particularly limited if the after-mentioned heat-shrinkable properties can emerge; preferably, a polystyrene based resin containing a polystyrene based resin having a syndiotactic structure. A 4-methylstyrene copolymerized syndiotactic polystyrene is used as a polystyrene based resin. The use of a polystyrene based resin having a syndiotactic structure improves mechanical strength and heat resistance. The use of such a polystyrene based resin brings the point where a low density of the polystyrene is in favor of a separation in the recycling process, and additionally heat resistance superior particularly in preservation by heating and the like, the reduction of a change in printing pitch by shrinking with time after forming a film, and the printing with a high precision as a label; further, improving the durability to a solvent contained in printing ink to have superior printing properties.

With regard to the tacticity by determining the quantity of a phenyl group and/or a substituted phenyl group as a side chain in a magnetic resonance method, the above-mentioned polystyrene based resin having a syndiotactic structure preferably exhibits 75% or more at dyad (two constitutional units), more preferably 85% or more, and preferably 30% or more at pentad (five constitutional units), more preferably 50% or more.

A polystyrene component composing a polystyrene based resin to be used for the present invention involves poly(alkylstyrene) such as polystyrene, poly(p-, m- or o-methylstyrene), poly(2,4-, 2,5-, 3,4- or 3,5-dimethylstyrene) and poly(p-tert-butylstyrene), poly(halogenated styrene) such as poly(p-, m- or o-chlorostyrene), poly(p-, m- or o-bromostyrene), poly(p-, m- or o-fluorostyrene) and poly(o-methyl-p-fluorostyrene), poly (halide substituted alkyl styrene) such as poly(p-, m- or o-chloromethylstyrene), poly(alkoxystyrene) such as poly(p-, m- or o-methoxystyrene) and poly(p-, m- or o-ethoxystyrene), poly(carboxyalkylstyrene) such as poly(p-, m- or o-carboxymethylstyrene), poly(alkyl ether styrene) such as poly(p-vinyl benzyl propyl ether), poly(alkyl silyl styrene) such as poly(p-trimethyl silyl styrene), and additionally poly(vinyl benzyl dimethoxyphosphide), and the like.

With regard to a heat-shrinkable polystyrene based resin film to be used for the present invention, a polystyrene based resin composing at least one layer of the film is preferably such that a plasticizer, a compatibilizer and the like are mixed into polystyrene during polymerization or a polymer, intended for lowering heat shrinkage starting temperature and improving shock resistance.

In the present invention, a thermoplastic resin and/or a rubber component are preferably added to a polystyrene based resin. The above-mentioned thermoplastic resin involves a polystyrene based resin such as polystyrene having an atactic structure, AS resin and ABS resin, a polyester based resin such as polyethylene terephthalate, polyethylene naphthalate and polybutylene terephthalate, a polyamide based resin such as nylon 6, nylon 66, nylon 12, nylon 4 and polyhexamethylene adipamide, a polyolefin based resin such as polyethylene, polypropylene and polybutene, and the like. The above-mentioned rubber component is preferably a rubber-like copolymer containing a styrene based compound as a component thereof; involving a random copolymer, a block copolymer or a graft copolymer such as to copolymerize one kind or more selected from each of the styrene and the rubber component. Such a rubber-like copolymer involves styrene-butadiene copolymer rubber, styrene-isoprene block copolymer, rubber in which a part or the whole of a butadiene portion thereof is hydrogenated, methyl acrylate-butadiene-styrene copolymer rubber, acrylonitrile-butadiene-styrene copolymer rubber, acrylonitrile-alkyl acrylate-butadiene-styrene copolymer rubber, methyl methacrylate-alkyl acrylate-butadiene-styrene copolymer rubber, and the like. The above-mentioned rubber-like copolymer containing a styrene based compound as a component thereof has a styrene unit and therefore favorable dispersion properties mainly for a polystyrene based resin having a syndiotactic structure, consequently having a great effect of improving physical properties on the polystyrene based resin. In particular, the above-mentioned rubber-like copolymer containing a styrene based compound as a component thereof is appropriate as a compatibility adjustor.

Another rubber component to be used involves natural rubber, polybutadiene, polyisoprene, polyisobutylene, neoprene, ethylene-propylene copolymer rubber, urethane rubber, silicone rubber, acrylic rubber, polyether-ester rubber, polyester-ester rubber, and the like.

In the present invention, the weight-average molecular weight of a polystyrene based resin composing a film is preferably 10,000 or more, and more preferably 50,000 or more. A weight-average molecular weight of less than 10,000 easily reduces drawing properties and heat resistance of a film. The upper limit of weight-average molecular weight is not particularly determined; however, a weight-average molecular weight of 1, 500, 000 or more occasionally causes rupture and the like accompanying an increase in drawing tension, so that the weight-average molecular weight is preferably less than 1,500,000.

In the present invention, other resins, a plasticizer, a compatibility adjustor, inorganic particles, organic particles, a coloring agent, an antioxidant, an antistatic agent and the like can be properly mixed into a heat-shrinkable polystyrene based resin film in order to improve electrostatic close adhesion properties, lubricating ease, drawing properties, processing aptitude, shock resistance and the like, and for the purpose of surface roughening, opacification, cavitation, weight reduction and the like.

The use of a polystyrene based resin as described above for raw materials composing a film according to the present invention brings various superior heat-shrinkable properties, superior printing properties such as adhesive properties to ink in forming a label, and no occurrence of a pin hole on a printing plane of the film; further, superior discarding properties and less influence on environment in the case of being incinerated.

A polystyrene based resin composing a film as described above is formed into a film shape by a generally used conventional method such as an extruding method and a calender method. The shape of a film is not particularly limited; for example, a plane shape or a tube shape. A drawing method to be used may be a generally used conventional method such as a roll drawing method, a long-gap drawing method, a tenter drawing method and a tubular drawing method. In any of the above-mentioned methods, the drawing may be performed by any of sequential biaxial drawing, simultaneous biaxial drawing, uniaxial drawing and a combination thereof. The drawing in longitudinal and lateral directions may be simultaneously performed with regard to the above-mentioned biaxial drawing, and sequential biaxial drawing such as to perform either of them earlier is effective, in which either of longitudinal and lateral directions may be performed earlier. Preferable conditions in the case of producing a heat-shrinkable polystyrene based resin film according to the present invention are described hereinafter. The multiplying factor of drawing is preferably 1.0 to 6.0, and the multiplying factor in a predetermined direction and the multiplying factor in a direction perpendicular to the direction may be the same or different. In the drawing process, the preheating is preferably performed at a temperature of the glass transition temperature (Tg) to (Tg + 50)°C of a resin composing a film. In the thermal fixation after drawing, the film is preferably passed through a heating zone at a temperature of 30°C to 150°C for approximately 1 to 30 seconds after the drawing. Also, after drawing the film, relaxation treatment may be performed in an appropriate degree before or after performing the thermal fixation. In addition, after the above-mentioned drawing, the process of cooling the film while stressing under a state of extension or strain may be added, or another cooling process may be further added after releasing the state of strain subsequently to the process.

The composition variation in resin components of a film is mainly considered as a factor by which the heat shrinkage rate of a lengthy film forming a film roll varies with a region. Typically, with regard to a heat-shrinkable polystyrene based resin film, the properties of the film are modified in order to render heat-shrinkable properties and strength compatible by blending two or more kinds of resins, using a resin comprising plural comonomer components, and the like. In the case of blending two or more kinds of resins, raw material chips for plural kinds of resins of different compositions are blended with a hopper and the like to be thereafter extruded from an extruder through melt-kneading and be made into a film. For example, in the case of three kinds of resins for raw materials, each of the raw material chips is continually or intermittently fed to three hoppers, and then the raw material chips are quantitatively fed to an extruder in accordance with the extrusion output of the extruder while mixing three kinds of the raw material chips finally with a hopper directly before or above the extruder (hereinafter referred to as 'a final hopper') through a buffer hopper as required, so as to be formed into a film. Depending on the capacity or shape of a final hopper, however, the raw material segregation phenomenon is easily caused such that the mixture ratio of the chips fed from the final hopper to the extruder varies in the case of a large quantity of the chips and a small quantity of residue thereof in the final hopper. This problem is particularly notable in the case where the shape and specific gravity of the chips varies with resins, in which case a heat shrinkage rate easily varies in a lengthy film.

Accordingly, in a lengthy film forming one film roll, the composition variation with a region of the film is preferably reduced in order to obtain the film having a small variation of a heat shrinkage rate, and for that purpose, in the case of using plural kinds of resins, the raw material segregation phenomenon in a final hopper is preferably prevented by rendering less the dispersion of the shape of raw material chips. Specifically, in the case of comprising the step of mixing and melt-extruding plural kinds of resins composing the heat-shrinkable polystyrene based resin film, a shape of raw material chips for each of the above-mentioned resins being rendered columnar and/or elliptically cylindrical, a major axis and a minor axis of a cross section perpendicular to the longitudinal direction and a length in the longitudinal direction of raw material chips for another resin with respect to raw material chips for a resin mixed in the largest quantity are preferably each within ±50% as a difference in an average value. Also, the plane form of a cross section perpendicular to the longitudinal direction with regard to the above-mentioned 'columnar' is not particularly limited; such as, measurable angular and circular. The above-mentioned major axis, minor axis and a length in the longitudinal direction are more preferably as a difference in an average value within ±20%, particularly preferably as a difference in an average value within ±15%. In the case where raw material chips are different in size and shape, smaller chips easily fall when a mixture of the chips falls in a final hopper, and thereby the ratio of larger chips rises when chip residue decreases in the final hopper, resulting in the raw material segregation; however, the uniformization of size and shape of the chips as described above can reduce the raw material segregation.

Also, for the purpose of preventing the raw material segregation phenomenon in a final hopper, in the case of comprising the step of mixing and melt-extruding resins composing a heat-shrinkable polystyrene based resin film by using an extruder provided with a funnel-shaped hopper as a feeding portion of raw material chips, a tilt angle as an angle formed by an oblique side and a horizontal line segment ina funnel-shaped part of the above-mentioned hopper is preferably made into 65° or more. The above-mentioned tilt angle of 65° or more allows chips to easily fall even with the dispersion of a shape thereof, and additionally chips to be dropped in a state such that a top face thereof is horizontal, thereby being effective in the reduction of the raw material segregation. The above-mentioned tilt angle is more preferably 70° or more. Plural hoppers may be used upstream of a final hopper, in which case the above-mentioned tilt angle is preferably made into 65° or more in any of the hoppers, more preferably 70° or more.

Further, a fine pulverulent body caused by collapse, failure and the like of raw material chips to be used promotes the occurrence of the raw material segregation, and thus the removal of a fine pulverulent body caused in the processes preferably reduces the ratio of a fine pulverulent body in a final hopper. Specifically, the ratio of a fine pulverulent body is preferably controlled within 1% by weight through all processes for feeding raw material chips to an extruder, more preferably 0.5% by weight. A method for reducing the ratio of a fine pulverulent body involves a method for removing a fine pulverulent body by a sieve in forming chips with a strand cutter, a method for removing by a cyclone-type air filter and the like in pneumatically carrying raw material chips, and the like.

Also, a method for rendering proper the capacity of a hopper to be used is preferable as a method for reducing the raw material segregation in the hopper. Specifically, the capacity of a hopper to be used is preferably made into 15 to 120% by weight of the discharge rate per hour of an extruder, more preferably 20 to 100% by weight.

In addition, a preferable method for mixing raw material chips for two or more kinds of resins involves a method for quantitatively feeding and mixing each of the raw material chips continually to an extruder with a hopper directly above the extruder (a final hopper). Also, raw material chips such that the dispersionof a size thereof is limited in the above-mentioned range may be previously mixed to thereafter be fed to a final hopper and an extruder through one, or two or more intermediate (buffer) hoppers. A method for mixing plural kinds of raw material chips involves a method for quantitatively feeding and mixing plural kinds of raw materials into a hopper from a device for quantitatively feeding raw material chips continually, or a method for previously mixing by using a blender and the like; in the case of the latter, a size of raw material chips is preferably noted so as not to cause the raw material segregation in discharging the mixture.

A factor by which the heat shrinkage rate of a lengthy film forming a film roll varies with a region involves the variation of the conditions in the processes of drawing the film except for the above-mentioned composition variation with a region of a resin composing the film. In the present invention, a method for reducing the variation of a surface temperature of a film by restraining the temperature variation in the processes of drawing the film is also preferable as another method for reducing the variation of a heat shrinkage rate in a film roll. For example, the processes of uniaxially drawing in a lateral direction by using a tenter include a preheating step before drawing, a drawing step, a heat-treating step after drawing, a relaxation-treating step, a redrawing step and the like; particularly, in a preheating step, a drawing step and a heat-treating step after drawing, the variation of a surface temperature of a film measured at an arbitrary point of time in each of the steps is preferably within $\pm 1^\circ$C relative to an average temperature covering the total length of the film, more preferably within $\pm 0.5^\circ$C relative to an average temperature. A small variation of a surface temperature of a film brings the performance of drawing and heat-treating at the same temperature covering the total length of the film, leading to the uniformization of heat shrinkage behavior. The temperature variation in a preheating step, a drawing step and a heat-treating step after drawing has a great influence on the variation of a heat shrinkage rate, and therefore the temperature variation is preferably restrained by using a heating equipment and a drawing equipment allowing a strict temperature control. Also, the temperature variation is preferably restrained in a preheating step and a heat-treating step after drawing.

Incidentally, 'the variation of a surface temperature of a film measured at an arbitrary point of time' in the present invention is measured by a method such as to continually measure a surface temperature of a film during the production of the film, for example, at a point of time when passed by 2m in a drawing step. An average temperature can be calculated at a point of time when the production of a roll of a film is finished, and if the variation of a surface temperature of a film is within $\pm 1^\circ$C relative to the average temperature, then the total length of the film is drawn in the same conditions, whereby the variation of a heat shrinkage rate is rendered less.

The thickness of a heat-shrinkable polystyrene based resin film is not particularly limited in the present invention; preferably in a range of 10 to 200 $\mu$m, more preferably in a range of 20 to 100 $\mu$m.

A film roll according to the present invention is formed by winding the above-mentioned heat-shrinkable polystyrene based resin film. A wind-up core to be used involves a core made of plastics and metal, such as generally used 3-inch, 6-inch and 8-inch.

A heat-shrinkable polystyrene based resin film obtained from a film roll according to the present invention is appropriately used as packaging materials used for coating, tying, exterior wrapping and the like of vessels and the like, and the use of the film according to the present invention allows a beautiful appearance to be obtained with a favorable repeatability; particularly, a label composed of the film according to the present invention is superior in covering properties and appropriate for packaging vessels. A heat-shrinkable polystyrene based resin film and a label according to the present invention can uniformly coat the whole of an article having a large covered area and an article having a complicated shape, for example, even a vessel having a thin neck part. The present invention allows a heat-shrinkable polystyrene based resin film having a superior applicability to vessels for preservation by heating, such that a label made of the film can stably maintain its appearance even at an exposure to the condition of high temperatures after shrinking; a heat-shrinkable polystyrene based resin film capable of protecting bodies to be packaged from exterior rays and preventing a deterioration in the bodies to be packaged; and a heat-shrinkable polystyrene based resin film having a superior low-temperature stability and a superior applicability to aseptic fill packaging and a packaging in a short time. A heat-shrinkable polystyrene based resin film and a label obtained from a film roll according to the present invention, therefore, are usable as various vessel labels of heat-resisting plastic bottles, glass jars, metallic vessels, ceramic wares and the like.

Best Mode for carrying out the Invention

The present invention is more specifically described hereinafter by using test examples, examples and reference examples, and is not limited thereto.

TEST EXAMPLES

1. Test Methods

(1) A heat shrinkage rate of a film roll in a constant range

With regard to a film roll of Examples 1 to 6, Comparative Examples 1 to 12 and Reference Examples 1 to 5, in a heat-shrinkable polystyrene based resin film composing a constant range such that film physical properties are stable with respect to the flow direction in producing the film, making a finishing end of the roll of the film roll into a beginning end, making a starting end of the roll thereof into a terminating end, providing a first cut out part ina 2m or less inwardportion from the above-mentioned beginning end, providing a final cut out part in a 2m or less inward portion from the above-mentioned terminating end, and further providing another cut out part at every approximately 100m (including an error range; a difference such as $\pm$1m is allowable) from the first cut out part, a 10cm $\times$ 10cm square sample having parallel sides in each of the longitudinal direction of the film and a direction perpendicular thereto was cut out from each of the cut out parts. The following treatment was performed for each of the samples in every cut out part: immersing in a hot water of a water bath at a temperature of 85°C for 10 seconds to pull up, and next immersing in a water at a temperature of 25°C for 10 seconds to pull up. A length (An: unit is cm) of one side mainly shrunk (in the main shrinking direction) was measured, and then a rate HSn (unit is %) of change in length after the treatment with respect to a length before the treatment was calculated as a heat shrinkage rate by using the following formula 2 to thereafter calculate an average value HSav (unit is %) of a heat shrinkage rate of the total samples and HSn-HSav. In Tables 3, 6 and 9, the maximum value of the absolute value |HSn-HSav| of a change in the heat shrinkage rate was shown as a representative value, which signified a range of the variation.

$$HSn\ (\%) \ = \ [(10-An)/10] \ \times \ 100 \quad formula\ 2$$

The above-mentioned test method is specifically described. For example, in the case of a film roll composed of a film having a length in a constant range of 498m, sample 1 is cut out in a 2m or less inward portion from a finishing end of the roll of the film in the constant range. Sample 2 is cut out in a portion approximately 100m distant from sample 1, sample 3 in a portion approximately 200m distant, sample 4 in a portion approximately 300m distant, sample 5 in a portion approximately 400m distant, and then the rest is shorter than 100m, so that sample 6 is cut out in a 2m or less inward portion from a starting end of the roll of the film. Even in the constant range, a finishing end of the roll of the film and a starting end of the roll thereof have a high possibility that heat-shrinkable properties vary more largely than other parts, whereby a sample is always cut out in a 2m or less inward portion from each of the ends. A heat shrinkage rate of each of the samples, which is within $\pm$5% relative to an average value of the heat shrinkage rate of the total samples, signifies that a difference |HSn-HSav| between a heat shrinkage rate HSn (%) of a sample piece n and an average value HSav (%) of the heat shrinkage rate of the total samples is each smaller than 5%. That is to say, it is preferred that a difference |HSmax-HSav between the maximum value HSmax of HSn and HSav as well as a difference |HSmin-HSav| between the minimum value HSmin of HSn and HSav are both within $\pm$5%.

(2) A maximum heat shrinkage rate

Six pieces of a heat-shrinkable polystyrene based resin film such as to have a width of 15 mm and a length of 210 mm at approximately regular intervals while regarding the main shrinking direction as the longitudinal direction were cut out from a film roll of Examples 1 to 6, Comparative Examples 1 to 12 and Reference Examples 1 to 5 so as to be made into test pieces, drawing a marked line at an interval of 200 mm in the longitudinal direction. Each of the test pieces stood in the middle of a hot-air circulating type incubator (FX-1 manufactured by OHTORI MANUFACTURING CO. , LTD. : damper closed, quick heater ON) at every 10°C from 100°C to 150°C so as to be heated for 1 minute. The test pieces were cut out from the incubator and cooled, and thereafter a distance (X' : unit is mm) between the marked lines was measured to calculate a rate D' (unit is %) of change in length after the treatment with respect to a length before the treatment by using the following formula 3. The maximum value of this rate D' of change in length was made into a maximum heat shrinkage rate.

$$D' \ (\%) \ = \ [(200 \ - \ X')/200] \ \times \ 100 \qquad \text{formula 3}$$

(3) A transmittance of near ultraviolet rays

A heat-shrinkable film from an arbitrary region of a film roll of Examples 1 and 2 , Comparative Examples 1 to 4 and Reference Example 1 was formed into a label formof a cylindrical tube-shaped transparent vessel having a length of 23 cm in a direction perpendicular to the main shrinking direction, such as to be a direction perpendicular to a rotational symmetry axis of the vessel, and then was mounted on a transparent 1, 000 ml PET bottle to be thereafter heat-shrunk in the same manner as the after-mentioned test (7). A measuring instrument such that a semiconductor UV sensor (G3614 manufactured by HAMAMATSU PHOTONICS K. K.) was attached at a tip of a thin stickwas connected to calibrate output and light energy density thereof (mw/cm$^2$), and the above-mentioned measuring instrument was inserted into the above-mentioned bottle through a 5mm-diameter hole provided for the middle of a cap in a mouth portion of the bottle along a rotational symmetry axis thereof. A light source (Black Light Blue FL15BL-B manufactured by MATSUSHITA ELECTRIC INDUSTRIAL CO., LTD. : 15W, 41cm) was disposed so that a central axis thereof was 15cm distant from a rotational symmetry axis of the above-mentioned bottle and was arranged in approximate parallel with the vessel, and then the vessel was irradiated from outside thereof to inside with the near ultraviolet rays from a direction perpendicular to a rotational symmetry axis of the vessel. The above-mentioned semiconductor UV sensor was moved along a rotational symmetry axis of the bottle so as to measure light energy density (A1 to A10) in a transmission through the film and the bottle at each spot for dividing the bottle into 10 equal parts from a bottom portion to a mouth portion excluding an opaque portion thereof, whereby an average value A of these was calculated. Next, a heat-shrinkable polystyrene based resin film was removed to measure light energy density (B1 to B10) in a transmission through the transparent vessel at the same measuring spot in the same manner as the above, whereby an average value B of these was calculated. An average value T of a transmittance of near ultraviolet rays represented in the following formula 1 was calculated by the above-mentioned values A and B. With regard to 'the main shrinking direction', the following maximum heat shrinkage rate was measured in longitudinal and lateral directions of a film, and a direction in which the maximum heat shrinkage rate was larger was regarded as the main shrinking direction. The lateral direction was the main shrinking direction in a film of Examples, Comparative Examples 1 to 4 and Reference Example 1.

$$T \ = \ A \ / \ B \qquad\qquad \text{formula 1}$$

A: an average value (n = 10) of a light energy density transmitting into the film and the vessel in a state of mounting the heat-shrinkable polystyrene based resin film on the transparent vessel
B: an average value (n = 10) of a light energy density transmitting into the transparent vessel in a state of not mounting the heat-shrinkable polystyrene based resin film on the transparent vessel

(4) A rate of change in length after a treatment of heating and loading a tension

A heat-shrinkable polystyrene based resin film such as to have a width of 5 mm and a length of 100m while regarding the main shrinking direction as the longitudinal direction was cut out from an arbitrary region of a film roll of Examples 3 and 4, Comparative Examples 5 to 8 and Reference Examples 2 and 3 so as to be made into a test piece, drawing a marked line at an interval of 50mm in the longitudinal direction in the middle thereof. A weight of 50g was attached at an end of the test piece by using a clip having a weight of 1.18g, and the other end was fixed with a proper jig so that the film and the weight drooped. The test piece stood in the middle of a hot-air circulating type incubator (FX-1 manufactured by OHTORI MANUFACTURING CO., LTD.: damper closed, quick heater ON) at a temperature of 110˚C so as to be heated for 1 minute. The test piece was taken out from the incubator and cooled, and thereafter a distance (A' : unit is mm) between the marked lines was measured to calculate a rate D (unit is %) of change in length after the treatment of heating and loading a tension (at a temperature of 110˚C, one-minute loading of a tensionof 51.18 gf) with respect to a length before the treatment by using the following formula 4. With regard to 'the main shrinking direction', the following maximum heat shrinkage rate was measured in longitudinal and lateral directions of a film, and a direction in which the maximum heat shrinkage rate was larger was regarded as the main shrinking direction. The lateral direction was the main shrinking direction in a film of Examples, Comparative Examples and Reference Example.

$$D\ (\%)\ =\ [(A'\ -\ 50)/50]\ \times\ 100 \qquad \text{formula 4}$$

(5) A heat shrinkage rate

A heat-shrinkable polystyrene based resin film such as to have a width of 15mm and a length of 210mm while regarding the main shrinking direction as the longitudinal direction was cut out from an arbitrary region of a film roll of Examples 5 and 6, Comparative Examples 9 to 12 and Reference Examples 4 and 5 so as to be made into a test piece, drawing a marked line at an interval of 200mm in the longitudinal direction. The following treatment was performed for the test piece: immersing in a hot water of a water bath at a temperature of 65°C for 10 seconds. A distance (X'' : unit is mm) between the marked lines was measured to calculate a rate D'' (unit is %) of change in length after the treatment with respect to a length before the treatment by using the following formula 5. Also, with regard to 'the main shrinking direction', the following maximum heat shrinkage rate was measured in longitudinal and lateral directions of a film, and a direction in which the maximum heat shrinkage rate was larger was regarded as the main shrinking direction. The lateral direction was the main shrinking direction in a film of Examples, Comparative Examples and Reference Example.

$$D''\ (\%)\ =\ [(200\ -\ X'')/200]\ \times\ 100 \qquad \text{formula 5}$$

(6) A dynamic viscoelasticity

Each undrawn sheet obtained in the step of producing a heat-shrinkable polystyrene based resin film forming a film roll of Examples 5 and 6, Comparative Examples 9 to 12 and Reference Examples 4 and 5 was cut out so as to have a width of 5mm and a length in a measuring portion of 30mm while regarding the MD direction as the longitudinal direction, thereby being made into a test piece. A dynamic viscoelasticity of the test piece was measured under the conditions of an elastic mode, a frequency of 50 Hz, a temperature range of -20 to 250°C and a heating rate of 2°C/minute to confirm the presence of a dispersion except alpha dispersion in a temperature range such that alpha dispersion derived from polystyrene is measured.

(7) Shrink finish properties

Three-color printing with the use of three-colorink (grass green, golden and white) manufactured by TOYO INK MFG. CO. , LTD. was performed for the whole length of a film composing a film roll of Examples 1 to 6, Comparative Examples 1 to 12 and Reference Examples 1 to 5, and thereafter the film was slit and solvent-bonded by 1,3-dioxolane with the use of a center seal machine to be rendered tube-shaped and wound in a twofold state. The whole tube was cut out into a size (the main shrinking direction is made into a circular cross-sectional direction and the length in the non-shrinking direction is 22 cm) for a full label for the after-mentioned PET bottle to form the label. The above-mentioned labels were mounted on a 1,000 ml PET bottle and passed through a steam tunnel (SH-1500-L manufactured by FUJI ASTEC, INC.). The conditions in the steam tunnel are the first zone at a temperature of 67°C, the second zone at a temperature of 80°C and a tunnel passage time of 10 seconds. All of the labels were similarly heat-shrunk, and the shrink finish properties were evaluated by visual observation in accordance with the following standard. In addition, 4 or more in the following standard was regarded as 'pass', 3 or less as 'defect' and the fraction defective was calculated in accordance with the following formula 6. Here, 'defect' is wrinkling, label end fold, color spot and shrinkage deficiency.

[Standard for evaluation]

5: the most favorable finish
4: favorable finish
3: 2 or less defects
2: 3 to 6 defects
1: not less than 6 defects

```
The fraction defective = (the number of 'defects' / the

total number of labels) × 100          formula 6
```

(8) Resistance to preservation by heating

A bottle (after heating) mounted with a label composed of a heat-shrinkable polystyrene based resin film composing a film roll of Examples 3 to 6, Comparative Examples 5 to 12 and Reference Examples 2 to 5 used for evaluating the shrink finish properties of the above-mentioned (7) was evacuated of as much air as possible and filled with water to be sealed up with a cap. The bottle was put sideways on a hot plate for a laboratory heated to a temperature of 110˚C and stood for 72 hours with regard to Examples 3 and 4, Comparative Examples 5 to 8 and Reference Examples 2 and 3 while for 24 hours with regard to Examples 5 and 6, Comparative Examples 9 to 12 and Reference Examples 4 and 5; thereafter, a state of the label were evaluated by visual observation in accordance with the following standard.

    ○: favorable with scarce faults on a label
    Δ: unfavorable with apparent faults on a label
    ×: defects with many faults

(9) A size of chips of a material

100 grains of chips were randomly taken out from among raw material chips for each polymer to be used for producing a heat-shrinkable polystyrene based resin film composing a film roll of Examples 1 to 6, Comparative Examples 1 to 12 and Reference Examples 1 to 5, and each size (any unit is mm), namely, a major axis and a minor axis of a cross section perpendicular to the longitudinal direction and a length in the longitudinal direction with respect to each of the grains was measured down to the first decimal place by using a caliper to calculate an average value thereof. Respective differences were calculated in the average value between each size of raw material chips for the main resin (a resin mixed in the largest quantity) and each size of raw material chips for another resin to calculate a percentage relative to the average value of each size of raw material chips for the main resin.

2. Test Results

The results of the above-mentioned tests (1) to (9) are shown in Tables 3, 6 and 9.

EXAMPLES

Example 1

Raw material chips for the main resin in which syndiotactic polystyrene (a weight-average molecular weight of 300,000) comprising 40 mol % of 4-methyl styrene copolymerized as a component was mixed with 0.05% by weight of calcium carbonate particles having an average particle diameter of 1.0 $\mu$m as a lubricant, raw material chips for a styrene-butadiene block copolymer (a rubber component) comprising 40% by weight of styrene copolymerized as a component, and raw material chips for a high styrene rubber (a styrene-butadiene copolymer rubber comprising 85% by weight of styrene as a component) as a modifier for adjusting compatibility were made into form and size as shown in Table 2, fed by a quantitative screw feeder so as to be in a weight ratio of 65/30/5 (the main resin/a rubber component/a modifier), and mixed in a hopper having a tilt angle of 70˚ directly above an extruder. This was melted at a temperature of 250˚C, extruded from a T-die having a lip gap of 800 $\mu$m, and cooled to solidify by closely adhering to a cooling roll at a temperature of 40˚C in an air knife method to obtain an amorphous sheet. At this time, 150kg of the raw material chips remained in the hopper as a residence. The amorphous sheet was preheated to a temperature of 110˚C, drawn in the lateral direction by a multiplying factor of 5.0 at a drawing temperature of 90˚C, and thereafter treated with the thermal fixation at a temperature of 60˚C for 15 seconds to form a heat-shrinkable polystyrene based resin film having a thickness of 50$\mu$m continually over 1,000m or more. The variation of a surface temperature during the formation of a film was within $\pm$0.8˚C relative to the average temperature in a preheating step, $\pm$0.6˚C relative to the average temperature in a drawing step and $\pm$0.5˚C relative to the average temperature in a thermally fixing step. The obtained film was slit so as to have a width of 400 mm and a length of 1,000m and was wound up on a 3-inch paper can to be made into a film roll. An image was formed by halftone printing on the whole plane of one side of the obtained film so as to offer an example.

Example 2

A film roll was obtained in the same manner as Example 1 except for making the raw material chips into form and size as shown in Table 2, replacing the modifier with a styrene graft styrene-butadiene rubber (a graft ratio of 100% by weight) in which a styrene-butadiene copolymer (25% by weight of styrene) was graft-polymerized with styrene, and making the variation of a surface temperature during the formation of a film within ±0.8˚C relative to the average temperature in a preheating step, ±0.5˚C relative to the average temperature in a drawing step and ±0.8˚C relative to the average temperature in a thermally fixing step.

Comparative Example 1

A film roll was obtained in the same manner as Example 1 except for making the raw material chips into form and size as shown in Table 2, and making the multiplying factor of drawing into 2.0.

Comparative Example 2

A film roll was obtained in the same manner as Example 1 except for making the raw material chips into form and size as shown in Table 2, and using a hopper having a tilt angle of 60˚.

Comparative Example 3

A film roll was obtained in the same manner as Example 1 except for making the raw material chips into form and size as shown in Table 2, and making the variation of a surface temperature during the formation of a film within ±1.0˚C relative to the average temperature in a preheating step, ±2.5˚C relative to the average temperature in a drawing step and ±2.0˚C relative to the average temperature in a thermally fixing step.

Comparative Example 4

A film roll was obtained in the same manner as Example 1 except for making the raw material chips into form and size as shown in Table 2, and making the variation of a surface temperature during the formation of a film within ±1.0˚C relative to the average temperature in a preheating step, ±2.5˚C relative to the average temperature in a drawing step and ±2.0˚C relative to the average temperature in a thermally fixing step.

Reference Example 1

A film roll was obtained in the same manner as Example 1 except for making the raw material chips into form and size as shown in Table 2, replacing the polystyrene in the main resin with syndiotactic polystyrene comprising no copolymerization component, and making a mixture ratio of the main resin, a rubber component and a modifier into a weight ratio of 50/50/0 (the main resin/a rubber component/a modifier).

Example 3

A film roll was obtained in the same manner as Example 1 except for replacing the polystyrene based resin in the main resin with syndiotactic polystyrene (a weight-average molecular weight of 300,000) comprising 30 mol % of 4-methyl styrene copolymerized, making the raw material chips into form and size as shown in Table 5, making a mixture ratio of the main resin/a rubber component/a modifier into a weight ratio of 75/20/5, and not performing halftone printing for the obtained film.

Example 4

A film roll was obtained in the same manner as Example 3 except for making the raw material chips into form and size as shown in Table 5, replacing the modifier with a styrene graft styrene-butadiene rubber (a graft ratio of 100% by weight) in which a styrene-butadiene copolymer (25% by weight of styrene) was graft-polymerized with styrene, and making the variation of a surface temperature during the formation of a film within ±0.8˚C relative to the average temperature in a preheating step, ±0.5˚C relative to the average temperature in a drawing step and ±0.8˚C relative to the average temperature in a thermally fixing step.

Comparative Example 5

A film roll was obtained in the same manner as Example 3 except for making the raw material chips into form and size as shown in Table 5, and making the multiplying factor of drawing into 2.0.

Comparative Example 6

A film roll was obtained in the same manner as Example 3 except for making the raw material chips into form and size as shown in Table 5, and using a hopper having a tilt angle of 60˚.

Comparative Example 7

A film roll was obtained in the same manner as Example 3 except for making the raw material chips into form and size as shown in Table 5, and making the variation of a surface temperature during the formation of a film within $\pm 1.0$˚C relative to the average temperature in a preheating step, $\pm 2.5$˚C relative to the average temperature in a drawing step and $\pm 2.0$˚C relative to the average temperature in a thermally fixing step.

Comparative Example 8

A film roll was obtained in the same manner as Example 3 except for making the raw material chips into form and size as shown in Table 5, and making the variation of a surface temperature during the formation of a film within $\pm 1.0$˚C relative to the average temperature in a preheating step, $\pm 2.5$˚C relative to the average temperature in a drawing step and $\pm 2.0$˚C relative to the average temperature in a thermally fixing step.

Reference Example 2

A film roll was obtained in the same manner as Example 3 except for making the raw material chips into form and size as shown in Table 5, replacing the polystyrene in the main resin with syndiotactic polystyrene comprising no copolymerization component, and making a mixture ratio of the main resin, a rubber component and a modifier into a weight ratio of 50/50/0 (the main resin/a rubber component/a modifier).

Reference Example 3

A film roll was obtained in the same manner as Example 3 except for making the raw material chips into form and size as shown in Table 5, and replacing the polystyrene in the main resin with atactic polystyrene.

Example 5

A film roll was obtained in the same manner as Example 1 except for replacing the polystyrene based resin in the main resin with syndiotactic polystyrene (a weight-average molecular weight of 300,000) comprising 33 mol % of 4-methyl styrene copolymerized, making the raw material chips into form and size as shown in Table 8, making a mixture ratio of the main resin/a rubber component/a modifier into a weight ratio of 55/40/5, making the multiplying factor of drawing into 6.0, and not performing halftone printing for the obtained film.

Example 6

A film roll was obtained in the same manner as Example 5 except for making the raw material chips into form and size as shown in Table 8, replacing the modifier with a styrene graft styrene-butadiene rubber (a graft ratio of 100% by weight) in which a styrene-butadiene copolymer (25% by weight of styrene) was graft-polymerized with styrene, and making the variation of a surface temperature during the formation of a film within $\pm 0.8$˚C relative to the average temperature in a preheating step, $\pm 0.5$˚C relative to the average temperature in a drawing step and $\pm 0.8$˚C relative to the average temperature in a thermally fixing step.

Comparative Example 9

A film roll was obtained in the same manner as Example 5 except for making the raw material chips into form and size as shown in Table 8, and making the multiplying factor of drawing into 2.0.

Comparative Example 10

A film roll was obtained in the same manner as Example 5 except for making the raw material chips into form and size as shown in Table 8, and using a hopper having a tilt angle of 60˚.

Comparative Example 11

A film roll was obtained in the same manner as Example 5 except for making the raw material chips into form and size as shown in Table 8, and making the variation of a surface temperature during the formation of a film within ±1.0˚C relative to the average temperature in a preheating step, ±2.5˚C relative to the average temperature in a drawing step and ±2.0˚C relative to the average temperature in a thermally fixing step.

Comparative Example 12

A film roll was obtained in the same manner as Example 5 except for making the raw material chips into form and size as shown in Table 8, and making the variation of a surface temperature during the formation of a film within ±1.0˚C relative to the average temperature in a preheating step, ±2.5˚C relative to the average temperature in a drawing step and ±2.0˚C relative to the average temperature in a thermally fixing step.

Reference Example 4

A film roll was obtained in the same manner as Example 5 except for making the raw material chips into form and size as shown in Table 8, replacing the polystyrene in the main resin with syndiotactic polystyrene comprising no copolymerization component, and making a mixture ratio of the main resin, a rubber component and a modifier into a weight ratio of 50/50/0 (the main resin/a rubber component/a modifier).

Reference Example 5

A film roll was obtained in the same manner as Example 5 except for making the raw material chips into form and size as shown in Table 8, and replacing the polystyrene in the main resin with atactic polystyrene.
The components of a heat-shrinkable polystyrene based resin film roll of the above-mentioned examples, comparative examples and reference examples in the following Tables 1, 4 and 7 are as follows.

(1) The main resin

PS1: 4-methyl styrene copolymerized syndiotactic polystyrene
PS2: syndiotactic polystyrene
PS3: atactic polystyrene

(2) Rubber component

G1: a styrene (40% by weight)-butadiene copolymer

(3) Modifier

a: a high styrene rubber (85% by weight of styrene)
b: a styrene graft styrene-butadiene rubber

Table 1

| | Main Resin P | | Rubber Component G | Modifier S | Mixture Ratio P/G/S (weight ratio) | Tilt Angle of Hopper (˚) | Multiplying Factor of Drawing (times) |
|---|---|---|---|---|---|---|---|
| | Kinds | Copolymerization Ratio (mol %) | | | | | |
| Example 1 | PS1 | 40 | G1 | a | 65/30/5 | 70 | 5.0 |

(continued)

| | Main Resin P | | Rubber Component G | Modifier S | Mixture Ratio P/G/S (weight ratio) | Tilt Angle of Hopper (°) | Multiplying Factor of Drawing (times) |
|---|---|---|---|---|---|---|---|
| | Kinds | Copolymerization Ratio (mol %) | | | | | |
| Example 2 | PS1 | 40 | G1 | b | 65/30/5 | 70 | 5.0 |
| Comparative Example 1 | PS1 | 40 | G1 | a | 65/30/5 | 70 | 2.0 |
| Comparative Example 2 | PS1 | 40 | G1 | a | 65/30/5 | 60 | 5.0 |
| Comparative Example 3 | PS1 | 40 | G1 | a | 65/30/5 | 70 | 5.0 |
| Comparative Example 4 | PS1 | 40 | G1 | a | 65/30/5 | 70 | 5.0 |
| Reference Example 1 | PS2 | - | G1 | - | 50/50/0 | 70 | 5.0 |

Table 2

| | Variation of Surface Temperature of Film (°C within) | | | Difference in Average Value of Size of Raw Material Chips (% within) | | |
|---|---|---|---|---|---|---|
| | Preheating Step | Drawing Step | Thermally Fixing Step | Major Axis | Minor Axis | Length |
| Example 1 | ±0.8 | ±0.6 | ±0.5 | ±15 | ±15 | ±18 |
| Example 2 | ±0.8 | ±0.5 | ±0.8 | ±18 | ±19 | ±19 |
| Comparative Example 1 | ±0.8 | ±0.6 | ±0.5 | ±15 | ±16 | ±17 |
| Comparative Example 2 | ±0.8 | ±0.6 | ±0.5 | ±15 | ±16 | ±17 |
| Comparative Example 3 | ±1.0 | ±2.5 | ±2.0 | ±15 | ±16 | ±17 |
| Comparative Example 4 | ±1.0 | ±2.5 | ±2.0 | ±55 | ±51 | ±34 |
| Reference Example 1 | ±0.8 | ±0.6 | ±0.5 | ±14 | ±13 | ±16 |

Table 3

| | (1) Variation Rate of Heat Shrinkage Rate in the Whole Roll (% within) | (2) Maximum Heat Shrinkage Rate (%) | (3) Transmittance of Near Ultraviolet Rays T | (7) Shrink Finish Properties (fraction defective) (%) |
|---|---|---|---|---|
| Example 1 | ±0.15 | 63 | 0.14 | 0.85 |
| Example 2 | ±0.16 | 75 | 0.07 | 1.23 |
| Comparative Example 1 | ±5.11 | 40 | 0.24 | 61.2 |

(continued)

|  | (1) Variation Rate of Heat Shrinkage Rate in the Whole Roll (% within) | (2) Maximum Heat Shrinkage Rate (%) | (3) Transmittance of Near Ultraviolet Rays T | (7) Shrink Finish Properties (fraction defective) (%) |
|---|---|---|---|---|
| Comparative Example 2 | ±7.70 | 66 | 0.55 | 20.1 |
| Comparative Example 3 | ±7.42 | 63 | 0.67 | 18.1 |
| Comparative Example 4 | ±8.12 | 65 | 0.68 | 58.0 |
| Reference Example 1 | ±3.20 | 51 | 0.23 | 43.3 |

Table 4

|  | Main Resin P | | Rubber Component G | Modifier S | Mixture Ratio P/G/S (weight ratio) | Tilt Angle of Hopper (°) | Multiplying Factor of Drawing (times) |
|---|---|---|---|---|---|---|---|
|  | Kinds | Copolymerization Ratio (mol %) | | | | | |
| Example 3 | PS1 | 30 | G1 | a | 75/20/5 | 70 | 5.0 |
| Example 4 | PS1 | 30 | G1 | b | 75/20/5 | 70 | 5.0 |
| Comparative Example 5 | PS1 | 30 | G1 | a | 75/20/5 | 70 | 2.0 |
| Comparative Example 6 | PS1 | 30 | G1 | a | 75/20/5 | 60 | 5.0 |
| Comparative Example 7 | PS1 | 30 | G1 | a | 75/20/5 | 70 | 5.0 |
| Comparative Example 8 | PS1 | 30 | G1 | a | 75/20/5 | 70 | 5.0 |
| Reference Example 2 | PS2 | - | G1 | - | 50/50/0 | 70 | 5.0 |
| Reference Example 3 | PS3 | - | G1 | a | 75/20/5 | 70 | 5.0 |

Table 5

|  | Variation of Surface Temperature of Film (°C within) | | | Difference in Average Value of Size of Raw Material Chips (% within) | | |
|---|---|---|---|---|---|---|
|  | Preheating Step | Drawing Step | Thermally Fixing Step | Major Axis | Minor Axis | Length |
| Example 3 | ±0.8 | ±0.6 | ±0.5 | ±15 | ±15 | ±18 |
| Example 4 | ±0.8 | ±0.5 | ±0.8 | ±18 | ±19 | ±19 |
| Comparative Example 5 | ±0.8 | ±0.6 | ±0.5 | ±15 | ±16 | ±17 |
| Comparative Example 6 | ±0.8 | ±0.6 | ±0.5 | ±15 | ±16 | ±17 |

(continued)

| | Variation of Surface Temperature of Film (˚C within) | | | Difference in Average Value of Size of Raw Material Chips (% within) | | |
|---|---|---|---|---|---|---|
| | Preheating Step | Drawing Step | Thermally Fixing Step | Major Axis | Minor Axis | Length |
| Comparative Example 7 | ±1.0 | ±2.5 | ±2.0 | ±15 | ±16 | ±17 |
| Comparative Example 8 | ±1.0 | ±2.5 | ±2.0 | ±55 | ±51 | ±34 |
| Reference Example 2 | ±0.8 | ±0.6 | ±0.5 | ±14 | ±13 | ±16 |
| Reference Example 3 | ±0.8 | ±0.6 | ±0.5 | ±15 | ±15 | ±18 |

Table 6

| | (1) Variation Rate of Rate in the Whole Roll (% within) | (2) Maximum Heat Shrinkage Rate (%) | (4) Rate of Change in Length after Treatment of Heating and Loading Tension (%) | (7) Shrink Finish Properties (fraction defective) (%) | (8) Resistance to Preservation by Heating |
|---|---|---|---|---|---|
| Example 3 | ±0.15 | 64 | 16.0 | 0.88 | ○ |
| Example 4 | ±0.20 | 72 | 50.0 | 1.24 | ○ |
| Comparative Example 5 | ±5.13 | 38 | 19.0 | 61.3 | ○ |
| Comparative Example 6 | ±7.70 | 67 | 24.0 | 20.8 | ○ |
| Comparative Example 7 | ±7.50 | 66 | 32.0 | 19.2 | ○ |
| Comparative Example 8 | ±8.32 | 66 | 29.0 | 55.8 | ○ |
| Reference Example 2 | ±3.24 | 49 | 0.23 | 44.4 | ○ |
| Reference Example 3 | ±0.25 | 63 | 100.0 | 1.50 | × |

Table 7

| | Main Resin P | | Rubber Component G | Modifier S | Mixture Ratio P/G/S (weight ratio) | Tilt Angle of Hopper (˚) | Multiplying Factor of Drawing (times) |
|---|---|---|---|---|---|---|---|
| | Kinds | Copolymerization Ratio (mol %) | | | | | |
| Example 5 | PS1 | 33 | G1 | a | 55/40/5 | 70 | 6.0 |
| Example 6 | PS1 | 33 | G1 | b | 55/40/5 | 70 | 6.0 |

(continued)

| | Main Resin P | | Rubber Component G | Modifier S | Mixture Ratio P/G/S (weight ratio) | Tilt Angle of Hopper (°) | Multiplying Factor of Drawing (times) |
|---|---|---|---|---|---|---|---|
| | Kinds | Copolymerization Ratio (mol %) | | | | | |
| Comparative Example 9 | PS1 | 33 | G1 | A | 55/40/5 | 70 | 2.0 |
| Comparative Example 10 | PS1 | 33 | G1 | A | 55/40/5 | 60 | 6.0 |
| Comparative Example 11 | PS1 | 33 | G1 | A | 55/40/5 | 70 | 6.0 |
| Comparative Example 12 | PS1 | 33 | G1 | A | 55/40/5 | 70 | 6.0 |
| Reference Example 4 | PS2 | - | G1 | - | 50/50/0 | 70 | 6.0 |
| Reference Example 5 | PS3 | - | G1 | A | 55/40/5 | 70 | 6.0 |

Table 8

| | Variation of Surface Temperature of Film (°C within) | | | Difference in Average Value of Size of Raw Material Chips (% within) | | |
|---|---|---|---|---|---|---|
| | Preheating Step | Drawing Step | Thermally Fixing Step | Major Axis | Minor Axis | Length |
| Example 5 | ±0.8 | ±0.6 | ±0.5 | ±15 | ±15 | ±18 |
| Example 6 | ±0.8 | ±0.5 | ±0.8 | ±18 | ±19 | ±19 |
| Comparative Example 9 | ±0.8 | ±0.6 | ±0.5 | ±15 | ±16 | ±17 |
| Comparative Example 10 | ±0.8 | ±0.6 | ±0.5 | ±15 | ±16 | ±17 |
| Comparative Example 11 | ±1.0 | ±2.5 | ±2.0 | ±15 | ±16 | ±17 |
| Comparative Example 12 | ±1.0 | ±2.5 | ±2.0 | ±55 | ±51 | ±34 |
| Reference Example 4 | ±0.8 | ±0.6 | ±0.5 | ±14 | ±13 | ±16 |
| Reference Example 5 | ±0.8 | ±0.6 | ±0.5 | ±15 | ±15 | ±18 |

Table 9

| | (1) Variation Rate of Heat Shrinkage Rate in the Whole Roll (% within) | (2) Maximum Heat Shrinkage Rate (%) | (5) Heat Shrinkage Rate (%) a hot water at a temperature of 65°C for 10 seconds | (6) Dynamic Viscoelasticity (the presence of a dispersion except alpha dispersion) | (7) Shrink Finish Properties (fraction defective) (%) | (8) Resistance to Preservation by Heating |
|---|---|---|---|---|---|---|
| Example 5 | ±0.18 | 62 | 14.0 | Present | 0.91 | ○ |
| Example 6 | ±0.23 | 71 | 19.0 | Present | 1.50 | ○ |
| Comparative Example 9 | ±6.20 | 39 | 12.0 | Present | 62.6 | ○ |
| Comparative Example 10 | ±7.75 | 65 | 11.0 | Present | 25.0 | ○ |
| Comparative Example 11 | ±7.63 | 62 | 8.0 | Present | 30.0 | ○ |
| Comparative Example 12 | ±9.32 | 60 | 9.0 | Present | 60.3 | ○ |
| Reference Example 4 | ±3.24 | 49 | 0 | Present | 44.4 | ○ |
| Reference Example 5 | ±0.25 | 63 | 4.0 | Absent | 1.50 | × |

Industrial Applicability

A film obtained from a heat-shrinkable polystyrene based resin film roll according to the present invention has a sufficiently high heat shrinkage rate in practical use and evenly shrinks in heat-shrinking regardless of the fluctuations and the nonuniformity of temperature in the shrinking process, thereby causing no shrinkage unevenness and offering a beautiful appearance. A film roll can be obtained such that, with regard to a film obtained from any region of the film roll, the variations in the following properties are reduced; protecting bodies to be packaged from exterior mechanical stimulus and rays, preventing the deterioration of the bodies to be packaged, causing no slackening and wrinkling even at an exposure to the condition of high temperatures after shrinking, stably maintaining its appearance, and having a sufficient heat shrinkage rate even in the low-temperature heat-shrinking process; and the yield is improved in the case of a label made of the film.

**Claims**

1. A heat-shrinkable polystyrene based resin film roll containing a polystyrene based resin comprising a 4-methylstyrene copolymerized syndiotactic polystyrene, said roll comprising a heat-shrinkable polystyrene based resin film, which comprises two or more kinds of resins of different compositions, to be wound thereinto;
   wherein, in a constant range such that film physical properties are stable with respect to a flow direction in producing the film, making a finishing end of a roll of the film roll into a beginning end, making a starting end of a roll thereof into a terminating end, providing a first cut out part in a 2m or less inward portion from said beginning end, and further providing another cut out part at every approximately 100m from the first cut out part, in measuring a heat shrinkage rate of a sample cut out from each of the cut out parts, which is denoted by a rate of change in length in a main shrinking direction after a treatment of immersing in a hot water at a temperature of 85°C for 10 seconds with respect to a state before said treatment, said heat-shrinkable polystyrene based resin film exhibits the heat shrinkage rate of each of the samples within ±5% relative to an average value of the heat shrinkage rate of the total samples, wherein said heat-shrinkable polystyrene based resin film has a width of 200 mm or more and a length of 300m or more, obtainable by a method comprising the steps of mixing and melt-extruding the resins composing the heat-shrinkable polystyrene based resin film;

wherein a shape of raw material chips for each of said resins is rendered columnar and/or elliptical; and a major axis and a minor axis of a cross section perpendicular to a longitudinal direction and a length in the longitudinal direction of raw material chips for another resin with respect to raw material chips for a resin mixed in the largest quantity are each within $\pm 50\%$ as a difference in an average value, and of preheating, drawing and heat-treating; wherein a variation of a surface temperature of a film measured at an arbitrary point of time in each of the steps is within $\pm 1°C$ relative to an average temperature covering the total length of the film, wherein said mixing and melt-extruding is carried out by using an extruder provided with a funnel-shapedhopperas a feeding portion of raw material chips; wherein a tilt angle as an angle formed by an oblique side and a horizontal line segment in a funnel-shaped part of said hopper is 65° or more.

2. A heat-shrinkable polystyrene based resin film roll according to Claim 1, wherein, drawing a marked line at an interval of 200 mm in a main shrinking direction on a sample cut out so as to have a width of 15mm and a length of 210mm, said heat-shrinkable polystyrene based resin film exhibits a maximum heat shrinkage rate of 40% or more, which is a maximum value of a rate of change in length in the main shrinking direction of said sample after a treatment of heating at every 10°C from 100°C to 150°C for 1 minute with respect to a length between the marked lines before said treatment.

3. A heat-shrinkable polystyrene based resin film roll according to Claim 1, wherein, being mounted on a bottle as a label form of a cylindrical tube-shaped transparent vessel such that a main shrinking direction is made into a cross-sectional direction of a cylinder, said heat-shrinkable polystyrene based resin film exhibits an average value T of a transmittance of near ultraviolet rays represented in the following formula 1, which is 0.5 or less after heat-shrinking in a case of irradiating the vessel from outside to inside thereof with the near ultraviolet rays from a direction perpendicular to a rotational symmetry axis of the vessel.

$$T = A / B \qquad\qquad \text{formula 1}$$

A: an average value (n = 10) of a light energy density transmitting into the film and the vessel in a state of mounting the heat-shrinkable polystyrene based resin film on the transparent vessel
B: an average value (n = 10) of a light energy density transmitting into the transparent vessel in a state of not mounting the heat-shrinkable polystyrene based resin film on the transparent vessel

4. A heat-shrinkable polystyrene based resin film roll according to Claim 1, wherein, drawing a marked line at an interval of 50 mm in a longitudinal direction in a middle of a sample cut out so as to have a width of 5 mm and a length of 100 mm while regarding a main shrinking direction as the longitudinal direction, said heat-shrinkable polystyrene based resin film exhibits a rate of change in length of 0% to 90% in the main shrinking direction of said sample after a treatment of loading a tension of 51.18 gf at a temperature of 110°C for 1 minute with respect to a length between the marked lines before said treatment.

5. A heat-shrinkable polystyrene based resin film roll according to Claim 1, wherein, drawing a marked line at an interval of 200 mm in a main shrinking direction on a sample cut out so as to have a width of 15 mm and a length of 210 mm, said heat-shrinkable polystyrene based resin film exhibits a heat shrinkage rate of 5% or more, which is denoted by a rate of change in length between the marked lines in the main shrinking direction of said sample after a treatment of immersing in a hot water at a temperature of 65°C for 10 seconds with respect to a state before said treatment.

6. A heat-shrinkable polystyrene based resin film roll according to Claim 1, wherein, in measuring a dynamic viscoelasticity of the film under the conditions of an elastic mode, a frequency of 50 Hz, a temperature range of -20°C to 250°C and a heating rate of 2°C/minute, said heat-shrinkable polystyrene based resin film exhibits a dispersion except alpha dispersion, which is measured in a temperature range such that alpha dispersion derived from polystyrene is measured.

7. A heat-shrinkable polystyrene based resin film roll according to Claim 1, wherein, in an undrawn sheet before being drawn into said heat-shrinkable polystyrene based resin film, in measuring a dynamic viscoelasticity of the film under the conditions of an elastic mode, a frequency of 50 Hz, a temperature range of -20°C to 250°C and a heating rate of 2°C/minute, said heat-shrinkable polystyrene based resin film comprises said undrawn sheet to be drawn exhibiting a dispersion except alpha dispersion, which is measured in a temperature range such that alpha dispersion derived from polystyrene is measured.

8. A heat-shrinkable polystyrene based resin film being taken from a heat-shrinkable polystyrene based resin film roll according to Claim 1.

9. A heat-shrinkable label comprising a heat-shrinkable polystyrene based resin film according to Claim 8.

**Patentansprüche**

1. Rolle einer wärmeschrumpfbaren Harzfolie auf Polystyrolbasis, enthaltend ein Harz auf Polystyrolbasis, umfassend ein 4-Methylstyrol-copolymerisiertes syndiotaktisches Polystyrol, wobei die Rolle eine wärmeschrumpfbare Harzfolie auf Polystyrolbasis umfaßt, welche zwei oder mehr Sorten von Harzen verschiedener Zusammensetzungen umfaßt, um dazu gewickelt zu sein,
   wobei,

   in einem konstanten Bereich, so daß die physikalischen Folieneigenschaften in Bezug auf eine Fließrichtung in der Herstellung der Folie stabil sind,
   das abschließende Ende einer Rolle der Folienrolle in ein beginnendes Ende machend, ein Startende einer Rolle davon in ein Abschlußende machend, einen ersten Ausschnitt-Teil in einem 2 m oder weniger von dem beginnenden Ende nach innen angeordneten Teil bereitstellend, und weiter einen weiteren Ausschnitt-Teil etwa alle 100 m von dem ersten Ausschnitt-Teil bereitstellend,

   durch das Messen einer Wärmeschrumpfrate einer Probe, welche von jedem der Ausschnitt-Teile ausgeschnitten ist, welche durch eine Veränderungsrate in der Länge in einer Hauptschrumpfrichtung nach einer Behandlung des Eintauchens in heißes Wasser bei einer Temperatur von 85˚C für 10 Sekunden, in Bezug auf einen Zustand vor der Behandlung, **gekennzeichnet** ist,
   die wärmeschrumpfbare Harzfolie auf Polystyrolbasis eine Wärmeschrumpfrate von jeder der Proben innerhalb von ±5%, bezogen auf einen mittleren Wert der Wärmeschrumpfrate der gesamten Proben, aufweist,
   wobei die wärmeschrumpfbare Harzfolie auf Polystyrolbasis eine Breite von 200 mm oder mehr und eine Länge von 300 m oder mehr aufweist,
   erhältlich durch ein Verfahren, umfassend die Schritte des Mischens und Schmelzextrudierens der Harze, aus welchen die wärmeschrumpfbare Harzfolie aus Polystyrolbasis zusammengesetzt ist, wobei eine Form von Rohmaterialchips für jedes der Harze säulenförmig und/oder ellipsenförmig gebildet wird, und
   eine Hauptachse und eine Nebenachse eines Querschnittbereichs, senkrecht zu einem Längsrichtung, und eine Länge in der Längsrichtung von Rohmaterialchips für ein weiteres Harz, bezogen auf Rohmaterialchips für ein Harz, welches in der größten Menge beigemischt wird, jeweils innerhalb von ±50% als eine Differenz eines durchschnittlichen Werts liegen, und
   des Vorwärmens, Ziehens und Wärmebehandelns,
   wobei eine Abweichung einer Oberflächentemperatur einer Folie, welche zu einem beliebigen Zeitpunkt in jedem der Schritte gemessen wird, innerhalb von ±1˚C bezogen auf eine durchschnittliche Temperatur liegt, welche die gesamte Länge der Folie abdeckt, wobei das Mischen und Schmelzextrudieren durch Verwenden eines Extruders ausgeführt wird, welcher mit einem trichterförmigen Behälter als Zuführungsteil von Rohmaterialchips ausgerüstet ist,
   wobei ein Kippwinkel als ein Winkel, welcher durch ein schrägschenkelige Seite und ein Horizontalliniensegment in einem trichterförmigen Teil des Behälters gebildet wird, 65˚C oder mehr beträgt.

2. Rolle einer wärmeschrumpfbaren Harzfolie auf Polystyrolbasis nach Anspruch 1, wobei, eine markierte Linie bei einem Intervall von 200 mm in einer Hauptschrumpfrichtung auf einer ausgeschnittenen Probe ziehend, um eine Breite von 15 mm und eine Länge von 210 mm aufzuweisen, die wärmeschrumpfbare Harzfolie auf Polystyrolbasis eine maximale Wärmeschrumpfrate von 40% oder mehr aufweist, welche ein Maximalwert einer Veränderungsrate in der Länge in der Hauptschrumpfrichtung der Probe, nach einer Wärmebehandlung alle 10˚C, von 100˚C bis 150˚C, für eine Minute ist, bezogen auf eine Länge zwischen den markierten Linien vor der Behandlung.

3. Rolle einer wärmeschrumpfbaren Harzfolie auf Polystyrolbasis nach Anspruch 1, wobei, angebracht an einer Flasche als eine Etikettform eines zylindrischen röhrenförmigen transparenten Gefäßes, so daß eine Hauptschrumpfrichtung in einer Querschnittsrichtung eines Zylinders erwirkt wird, die wärmeschrumpfbare Harzfolie auf Polystyrolbasis einen mittleren Wert T einer Transmission von Nah-Ultraviolettstrahlen aufweist, dargestellt in der folgenden Formel 1, welcher 0,5 oder weniger, nach Wärmeschrumpfen in einem Fall des Bestrahlens des Gefäßes von außen nach innen davon mit den Nah-Ultraviolettstrahlen von einer Richtung, senkrecht zu einer rotationssymmetrischen Achse des Gefäßes, beträgt.

$$T = A / B \qquad\qquad \text{Formel 1}$$

A: Ein durchschnittlicher Wert (n = 10) einer Lichtenergiedichte, welche in die Folie und das Gefäß in einem Zustand des Anbringens der wärmeschrumpfbaren Harzfolie auf Polystyrolbasis auf dem transparenten Gefäß, durchgelassen wird

B: Ein durchschnittlicher Wert (n = 10) einer Lichtenergiedichte, welche in das transparente Gefäß in einem Zustand des Nichtanbringens der wärmeschrumpfbaren Harzfolie auf Polystyrolbasis auf das transparente Gefäß, durchgelassen wird.

4. Rolle einer wärmeschrumpfbaren Harzfolie auf Polystyrolbasis nach Anspruch 1, wobei, eine markierte Linie bei einem Intervall von 50 mm in einer Längsrichtung in der Mitte einer ausgeschnittenen Probe ziehend, um eine Breite von 5 mm und eine Länge von 100 mm zu erhalten, während eine Hauptschrumpfrichtung als die Längsrichtung betrachtet wird, die wärmeschrumpfbare Harzfolie auf Polystyrolbasis eine Änderungsrate in der Länge von 0% bis 90% in der Hauptschrumpfrichtung der Probe, nach einer Behandlung des Beladens mit einer Spannung von 51,18 gf bei einer Temperatur von 110˚C für 1 Minute, bezogen auf eine Länge zwischen den markierten Linien vor der Behandlung, aufweist.

5. Rolle einer wärmeschrumpfbaren Harzfolie auf Polystyrolbasis nach Anspruch 1, wobei, eine markierte Linie bei einem Intervall von 200 mm in einer Hauptschrumpfrichtung auf einer ausgeschnittenen Probe ziehend, um eine Breite von 15 mm und eine Länge von 210 mm aufzuweisen, die wärmeschrumpfbare Harzfolie auf Polystyrolbasis eine Wärmeschrumpfrate von 5% oder mehr aufweist, welche durch eine Änderungsrate in der Länge zwischen den markieren Linien in der Hauptschrumpfrichtung der Probe, nach einer Behandlung des Eintauchens in heißem Wasser bei einer Temperatur von 65˚C für 10 Sekunden, bezogen auf einen Zustand vor der Behandlung, **gekennzeichnet** ist.

6. Rolle einer wärmeschrumpfbaren Harzfolie auf Polystyrolbasis nach Anspruch 1, wobei durch Messen einer dynamischen Viskoseelastizität der Folie unter den Bedingungen eines elastischen Modus, einer Frequenz von 50Hz, eines Temperaturbereichs von -20˚C bis 250˚C und einer Erwärmungsrate von 2˚C/Minute, die wärmeschrumpfbare Harzfolie auf Polystyrolbasis eine Dispersion außer Alpha-Dispersion aufweist, welche in einem Temperaturbereich gemessen wird, so daß die von Polystyrol abgeleitete Alpha-Dispersion gemessen wird.

7. Rolle einer wärmeschrumpfbaren Harzfolie auf Polystyrolbasis nach Anspruch 1, wobei in einer ungezogenen Folie, bevor diese in die wärmeschrumpfbare Harzfolie auf Polystyrolbasis gezogen wird, durch Messen einer dynamischen Viskoelastizität der Folie unter den Bedingungen eines elastischen Modus, einer Frequenz von 50 Hz, eines Temperaturbereichs von -20˚C bis 250˚C und einer Erwärmungsrate von 2˚C/Minute, die wärmeschrumpfbare Harzfolie auf Polystyrolbasis die ungezogene, zu ziehende Folie umfaßt, welche eine Dispersion außer Alpha-Dispersion aufweist, welche in einem Temperaturbereich gemessen wird, so daß von Polystyrol abgeleitete Alpha-Dispersion gemessen wird.

8. Wärmeschrumpfbare Harzfolie auf Polystyrolbasis, welche von einer Rolle einer wärmeschrumpfbaren Harzfolie auf Polystyrolbasis nach Anspruch 1 genommen ist.

9. Wärmeschrumpfbares Etikett, umfassend eine wärmeschrumpfbare Harzfolie auf Polystyrolbasis nach Anspruch 8.

**Revendications**

1. Un rouleau de film de résine à base de polystyrène thermorétractable contenant une résine à base de polystyrène comprenant un polystyrène syndiotactique copolymérisé avec du 4-méthylstyrène, ledit rouleau comprenant un film de résine à base de polystyrène thermorétractable, qui comprend deux ou plus de types de résines de différentes compositions, qui y est enroulé ;

dans lequel, dans une gamme constante de telle manière que les propriétés physiques du film soient stables par rapport à une direction de progression dans la production du film, en faisant d'une extrémité terminale d'un rouleau du film une extrémité initiale, en faisant d'une extrémité initiale d'un rouleau de celui-ci une extrémité terminale, en réalisant une première découpe d'une partie dans une portion vers l'intérieur de 2 m ou moins à partir de ladite extrémité initiale, et en réalisation également une autre découpe approximativement tous les 100 m à partir de la première découpe, en mesurant un taux de thermorétraction d'un échantillon prélevé sur chacune des parties découpées, qui est définie par un taux de changement de longueur dans une direction principale de rétraction après un traitement par immersion dans de l'eau chaude à une température de 85˚C pendant 10 secondes par rapport à un état préalable audit traitement, ledit film de résine à base de polystyrène thermorétractable présente le taux de thermorétraction de chacun des échantillons dans une marge de ±5% par rapport à une valeur moyenne de la thermorétraction de tous les échantillons, dans lequel ledit film de résine à base de polystyrène thermorétractable a une largeur de 200 mm ou plus et une longueur de 300 m ou plus, que l'on peut obtenir par une méthode comprenant les étapes de mélange et d'extrusion de matière fondue des résines composant le film de résine à base de polystyrène thermorétractable ;

dans laquelle une forme de pastilles de matière première pour chacune desdites résines est rendue colonnaire et/ou elliptique ; et un axe majeur et un axe mineur d'une section transversale perpendiculaire à une direction longitudinale et à une longueur dans la direction longitudinale des pastilles de matière première pour une autre résine par rapport à des pastilles de matière première pour une résine mélangée dans la plus grande quantité sont chacune dans ±50% en tant que différence dans une valeur moyenne, et de préchauffe, d'étirage et de traitement thermique ;

dans laquelle une variation d'une température de surface d'un film mesurée à un moment arbitraire dans chacune des étapes est dans ±1˚C par rapport à une température moyenne couvrant la longueur totale du film, dans laquelle ledit mélange et ladite extrusion de matière fondue sont réalisées au moyen d'une extrudeuse équipée d'une trémie en forme d'entonnoir en guise de portion d'alimentation de pastilles de matière première ;

dans laquelle un angle d'inclinaison comme angle formé par un côté oblique et un segment de ligne horizontale dans la partie en forme d'entonnoir de ladite trémie est de 65˚ ou plus.

2. Un rouleau de film de résine à base de polystyrène thermorétractable selon la revendication 1, dans lequel, en dessinant une ligne marquée à un intervalle de 200 mm dans une direction de rétraction principale sur un échantillon découpé de manière à avoir une largeur de 15 mm et une longueur de 210 mm, ledit film de résine à base de polystyrène thermorétractable présente un taux de thermorétraction maximum de 40% ou plus, qui est une valeur maximum d'un taux de changement en longueur dans la direction de rétraction principale dudit échantillon après un traitement consistant en un échauffement tous les 10˚C de 100˚C à 150˚C pendant une minute par rapport à une longueur entre les lignes marquées avant ledit traitement.

3. Un rouleau de film de résine à base de polystyrène thermorétractable selon la revendication 1, dans lequel, monté sur une bouteille en tant qu'étiquette d'un récipient transparent cylindrique en forme de tube de sorte que la direction de rétraction principale se fasse dans une direction transversale d'un cylindre, ledit film de résine à base de polystyrène thermorétractable présente une valeur T moyenne d'un facteur de transmission de rayons de l'ultraviolet proche représentée dans la formule 1 suivante, qui est de 0,5 ou moins après thermorétraction dans le cas d'une irradiation du récipient de l'extérieur vers l'intérieur de celui-ci à l'aide des rayons de l'ultraviolet proche dans une direction perpendiculaire à l'axe de symétrie de rotation du récipient.

$$T = A / B \qquad \text{formule 1}$$

A : une valeur moyenne (n=10) d'une densité d'énergie lumineuse se transmettant dans le film et le récipient dans un état de montage du film de résine à base de polystyrène thermorétractable sur le récipient transparent.
B : une valeur moyenne (n=10) d'une densité d'énergie lumineuse se transmettant dans le récipient transparent dans un état de non-montage du film de résine à base de polystyrène thermorétractable sur le récipient transparent.

4. Un rouleau de film de résine à base de polystyrène thermorétractable selon la revendication 1, dans lequel, en dessinant une ligne marquée à un intervalle de 50 mm dans une direction longitudinale au milieu d'un échantillon découpé de manière à avoir une largeur de 5 mm et une longueur de 100 mm tout en considérant la direction de rétraction principale comme la direction longitudinale, ledit film de résine à base de polystyrène thermorétractable présente un taux de changement de longueur de 0% à 90% dans la direction de rétraction principale dudit échantillon après un traitement consistant à appliquer une tension de 51,18 gf à une température de 110˚C pendant 1 minute par rapport à une longueur entre les lignes marquées avant ledit traitement.

5. Un rouleau de film de résine à base de polystyrène thermorétractable selon la revendication 1, dans lequel, en dessinant une ligne marquée à un intervalle de 200 mm dans une direction de rétraction principale sur un échantillon découpé de manière à avoir une largeur de 15 mm et une longueur de 210 mm, ledit film de résine à base de polystyrène thermorétractable présente un taux de thermorétraction de 5% ou plus, qui est défini par un taux de changement de longueur entre les lignes marquées dans la direction de rétraction principale dudit échantillon après un traitement consistant à l'immerger dans de l'eau chaude à une température de 65˚C pendant 10 secondes par rapport à un état avant ledit traitement.

6. Un rouleau de film de résine à base de polystyrène thermorétractable selon la revendication 1, dans lequel, en mesurant une viscoélasticité dynamique du film dans les conditions d'un mode élastique, d'une fréquence de 50 Hz, d'une gamme de température de -20˚C à 250˚C et d'un taux d'échauffement de 2˚C/minute, ledit film de résine à base de polystyrène thermorétractable présente une dispersion à l'exception d'une dispersion alpha, qui est mesurée dans une gamme de températures telle que la dispersion alpha dérivée du polystyrène est mesurée.

7. Un rouleau de film de résine à base de polystyrène thermorétractable selon la revendication 1, dans lequel, dans une feuille non étirée avant d'être étirée en ledit film de résine à base de polystyrène thermorétractable, en mesurant une viscoélasticité dynamique du film dans les conditions d'un mode élastique, d'une fréquence de 50 Hz, d'une gamme de températures de -20˚C à 250˚C et d'un taux d'échauffement de 2˚C/minute, ledit film de résine à base de polystyrène thermorétractable comprend ladite feuille non étirée à étirer présentant une dispersion à l'exception d'une dispersion alpha, qui est mesurée dans une gamme de températures telle que la dispersion alpha dérivée du polystyrène est mesurée.

8. Un film de résine à base de polystyrène thermorétractable prélevé sur un rouleau de film de résine à base de polystyrène thermorétractable selon la revendication 1.

9. Une étiquette thermorétractable comprenant un film de résine à base de polystyrène thermorétractable selon la revendication 8.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Nakatani, Mr. Yamada.** *44th rheology forum lecture syllabus,* 1996, 169-172